# EUROPEAN PATENT APPLICATION

(11) **EP 4 322 632 A1**
(43) Date of publication of application: **14.02.2024**
(21) Application number: 23171751.3
(22) Date of filing: 05.05.2023
(51) Int. Cl.: H04W 52/38, H04L 5/00

(54) **HANDLING OF NEW RADIO SLOT AGGREGATION IN RADIO SIDELINK CO-CHANNEL COEXISTENCE**

(30) Priority: 10.08.2022 US 202263396845 P
(71) Applicant: Nokia Technologies Oy, 02610 Espoo (FI)
(72) Inventor: JACOBSEN, Thomas Haaning, Nørresundby (DK); YU, Ling, Kauniainen (FI); WILDSCHEK, Torsten, Gloucester (GB); MEDINA, Daniel, Munich (DE); KIILERICH PRATAS, Nuno Manuel, Aalborg (DK); VAN PHAN, Vinh, Oulu (FI); SABOURI-SICHANI, Faranaz, Aalborg (DK); LINDHOLM, Jari Olavi, Palojoki (FI); SHIMIZU, Takayuki, Mountain View (US); ARZELIER, Claude, Molieres-sur-Ceze (FR)
(74) Representative: Script IP Limited

(57) **Abstract**

Systems, methods, apparatuses, and computer program products for handling NR slot aggregation in radio SL co-channel coexistence. A method may include determining that one or more slots of a first radio access technology overlaps a subframe of a second radio access technology. The method may also include detecting whether the second radio access technology is using the subframe of the second radio access technology. The method may further include determining by an outcome of at least one evaluated condition whether to transmit in the one or more overlapping slots or refrain to transmit in the one or more overlapping slots. The method may further include performing transmission with a same transmit power in all the slots that overlap the subframe of the second radio access technology.

## Description

### FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to apparatuses, systems, and/or methods for handling NR slot aggregation in radio sidelink (SL) co-channel coexistence.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Some example embodiments may be directed to a method. The method may include determining that one or more slots of a first radio access technology overlaps a subframe of a second radio access technology. The method may also include detecting whether the second radio access technology is using the subframe of the second radio access technology. The method may further include determining by an outcome of at least one evaluated condition whether to transmit in the one or more overlapping slots or refrain to transmit in the one or more overlapping slots. In addition, the method may include performing transmission with a same transmit power in all the slots that overlap the subframe of the second radio access technology.

Other example embodiments may be directed to an apparatus. The apparatus may include at least one processor and at least one memory storing instructions that, when executed by the at least one processor, cause the apparatus at least to determine that one or more slots of a first radio access technology overlaps a subframe of a second radio access technology. The apparatus may also be caused to detect whether the second radio access technology is using the subframe of the second radio access technology. The apparatus may further be caused to determine by an outcome of at least one evaluated condition whether to transmit in the one or more overlapping slots or refrain to transmit in the one or more overlapping slots. In addition, the apparatus may be caused to perform transmission with a same transmit power in all the slots that overlap the subframe of the second radio access technology.

Other example embodiments may be directed to an apparatus. The apparatus may include means for determining that one or more slots of a first radio access technology overlaps a subframe of a second radio access technology. The apparatus may also include means for detecting whether the second radio access technology is using the subframe of the second radio access technology. The apparatus may further include means for determining by an outcome of at least one evaluated condition whether to transmit in the one or more overlapping slots or refrain to transmit in the one or more overlapping slots. In addition, the apparatus may include means for performing transmission with a same transmit power in all the slots that overlap the subframe of the second radio access technology.

In accordance with other example embodiments, a non-transitory computer readable medium may be encoded with instructions that may, when executed in hardware, perform a method. The method may include determining that one or more slots of a first radio access technology overlaps a subframe of a second radio access technology. The method may also include detecting whether the second radio access technology is using the subframe of the second radio access technology. The method may further include determining by an outcome of at least one evaluated condition whether to transmit in the one or more overlapping slots or refrain to transmit in the one or more overlapping slots. In addition, the method may include performing transmission with a same transmit power in all the slots that overlap the subframe of the second radio access technology.

Other example embodiments may be directed to a computer program product that performs a method. The method may include determining that one or more slots of a first radio access technology overlaps a subframe of a second radio access technology. The method may also include detecting whether the second radio access technology is using the subframe of the second radio access technology. The method may further include determining by an outcome of at least one evaluated condition whether to transmit in the one or more overlapping slots or refrain to transmit in the one or more overlapping slots. In addition, the method may include performing transmission with a same transmit power in all the slots that overlap the subframe of the second radio access technology.

Other example embodiments may be directed to an apparatus that may include circuitry configured to determine that one or more slots of a first radio access technology overlaps a subframe of a second radio access technology. The apparatus may also include circuitry configured to detect whether the second radio access technology is using the subframe of the second radio access technology. The apparatus may further include circuitry configured to determine by an outcome of at least one evaluated condition whether to transmit in the one or more overlapping slots or refrain to transmit in the one or more overlapping slots. In addition, the apparatus may include circuitry configured to perform transmission with a same transmit power in all the slots that overlap the subframe of the second radio access technology.

Certain example embodiments may be directed to a method. The method may include receiving, from a user equipment of a first radio access technology, a transmission on a resource selected from an aggregated group including one or more slots of the first radio access technology overlapping a subframe of a second radio access technology. The method may also include receiving, from the user equipment of the first radio access technology, sidelink control information indicating that the transmission is part of a group of slots, wherein the sidelink control information identifies which slots are part of the aggregated group. The method may further include determining, based on the sidelink control information, a slot of the aggregated group for which a physical sidelink feedback channel should be transmitted.

Other example embodiments may be directed to an apparatus. The apparatus may include at least one processor and at least one memory storing instructions that, when executed by the at least one processor, cause the apparatus at least to receive, from a user equipment of a first radio access technology, a transmission on a resource selected from an aggregated group including one or more slots of the first radio access technology overlapping a subframe of a second radio access technology. The apparatus may also be caused to receive, from the user equipment of the first radio access technology, sidelink control information indicating that the transmission is part of a group of slots, wherein the sidelink control information identifies which slots are part of the aggregated group. The apparatus may further be caused to determine, based on the sidelink control information, a slot of the aggregated group for which a physical sidelink feedback channel should be transmitted.

Other example embodiments may be directed to an apparatus. The apparatus may include means for receiving, from a user equipment of a first radio access technology, a transmission on a resource selected from an aggregated group including one or more slots of the first radio access technology overlapping a subframe of a second radio access technology. The apparatus may also include means for receiving, from the user equipment of the first radio access technology, sidelink control information indicating that the transmission is part of a group of slots, wherein the sidelink control information identifies which slots are part of the aggregated group. The apparatus may further include means for determining, based on the sidelink control information, a slot of the aggregated group for which a physical sidelink feedback channel should be transmitted.

In accordance with other example embodiments, a non-transitory computer readable medium may be encoded with instructions that may, when executed in hardware, perform a method. The method may include receiving, from a user equipment of a first radio access technology, a transmission on a resource selected from an aggregated group including one or more slots of the first radio access technology overlapping a subframe of a second radio access technology. The method may also include receiving, from the user equipment of the first radio access technology, sidelink control information indicating that the transmission is part of a group of slots, wherein the sidelink control information identifies which slots are part of the aggregated group. The method may further include determining, based on the sidelink control information, a slot of the aggregated group for which a physical sidelink feedback channel should be transmitted.

Other example embodiments may be directed to a computer program product that performs a method. The method may include receiving, from a user equipment of a first radio access technology, a transmission on a resource selected from an aggregated group including one or more slots of the first radio access technology overlapping a subframe of a second radio access technology. The method may also include receiving, from the user equipment of the first radio access technology, sidelink control information indicating that the transmission is part of a group of slots, wherein the sidelink control information identifies which slots are part of the aggregated group. The method may further include determining, based on the sidelink control information, a slot of the aggregated group for which a physical sidelink feedback channel should be transmitted.

Other example embodiments may be directed to an apparatus that may include circuitry configured to receive, from a user equipment of a first radio access technology, a transmission on a resource selected from an aggregated group including one or more slots of the first radio access technology overlapping a subframe of a second radio access technology. The apparatus may also include circuitry configured to receive, from the user equipment of the first radio access technology, sidelink control information indicating that the transmission is part of a group of slots, wherein the sidelink control information identifies which slots are part of the aggregated group. The apparatus may also include circuitry configured to determine, based on the sidelink control information, a slot of the aggregated group for which a physical sidelink feedback channel should be transmitted.

### BRIEF DESCRIPTION OF THE DRAWINGS:

For proper understanding of example embodiments, reference should be made to the accompanying drawings, wherein:
FIG. 1(a) illustrates an example LTE sidelink (SL) resource allocation mode 3.
FIG. 1(b) illustrates an example LTE SL resource allocation mode 4.
FIG. 2 illustrates an example LTE-V2X slot format for a physical sidelink shared channel (PSSCH) and a physical sidelink control channel (PSCCH).
FIG. 3(a) illustrates an example NR SL resource allocation mode 1.
FIG. 3(b) illustrates an example NR SL resource allocation mode 2.
FIG. 4(a) illustrates an example SL slot format with PSCCH/PSSCH.
FIG. 4(b) illustrates an example of another SL slot format with PSCCH/PSSCH and PSFCH.
FIG. 5 illustrates PSSCH demodulation reference signal (DMRS) configurations based on the number of used symbols and duration of the PSCCH.
FIG. 6 illustrates an example impact of NR transmissions.
FIG. 7 illustrates an example flow diagram of a method, according to certain example embodiments.
FIG. 8 illustrates an example of synchronized LTE SL and NR SL operations with co-channel co-existence, according to certain example embodiments.
FIG. 9 illustrates an example of different options of SF#1, according to certain example embodiments.
FIG. 10 illustrates an example flow diagram of a NR SL Tx decision chain, according to certain example embodiments.
FIG. 11 illustrates an example flow diagram of a method, according to certain example embodiments.
FIG. 12 illustrates an example flow diagram of another method, according to certain example embodiments.
FIG. 13 illustrates a set of apparatuses, according to certain example embodiments.

### DETAILED DESCRIPTION:

It can be readily understood that the components of certain example embodiments, as generally described and illustrated in the figures herein, may be arranged and designed in a wide variety of different configurations. The following is a detailed description of some example embodiments of systems, methods, apparatuses, and computer program products for handling NR slot aggregation in radio SL co-channel coexistence.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

The technical specifications of 3^{rd} Generation Partnership Project (3GPP) has focused on co-channel coexistence to allow NR SL and LTE SL to coexist on a shared frequency channel in the intelligent transport systems (ITS) spectrum. For instance, vehicle to everything (V2X) deployment scenarios have been considered where both LTE V2X and NR V2X devices coexist in the same frequency channel. For the two different types of devices to coexist while using a common carrier frequency, there is provided a mechanism to efficiently utilize resource allocation by two technologies without negatively impacting the operation of each technology. Additionally, it is desirable that mechanisms that allow co-channel coexistence between NR and LTE be enabled by NR specifications because no enhancements are allowed to LTE specifications, and it may not be feasible to reconfigure an LTE resource pool (RP) configuration based on the difficulty to reach complete LTE SL device coverage (to avoid a configuration mismatch).

Bands of 5855-5875 MHz and 5875-5925 MHz (i.e., the 5.9 GHz band) have been designed for use by road ITS. Additionally, 5855-5875 MHz is designed for no-safety road-ITS, whereas 5875-5935 MHz is designed for safety related ITS. Furthermore, 5875-5915 MHz and 5915-5925 MHz are prioritized for road-ITS and rail-ITS applications, respectively, and with the frequency range 5925-5935 MHz available for rail-ITS.

It may be noted that no harmful interference may be caused to the application having priority. Additionally, road-ITS and rail-ITS may remain confined to their respective prioritized frequency range until appropriate spectrum sharing solutions are defined. Further, vehicle-to-vehicle (V2V) communications for road-ITS maybe permitted at 5915-5925 MHz once spectrum sharing solutions for the protection of rail-ITS have been developed at ETSI. In the absence of such sharing solutions for the protection of rail-ITS, infrastructure-to-vehicle (I2V) communications for road-ITS may be permitted at 5915-5925 MHz subject to coordination with rail-ITS. Additionally, use of spectrum in the frequency range 5855-5875 MHz may be on a non-interference/non-protected basis, and may include use by non-safety road-ITS and non-specific short range devices. In some cases, LTE-V2X may be constrained to the 5905-5915 MHz and 5915-5925 MHz bands. The remaining spectrum may be available to NR-V2X.

To maximize alignment with the technology specific channel allocations, and to avoid co-channel operation with ITS-G5, LTE-V2X may be deployed at 5905-5925 MHz. The channel at 5915-5925 MHz may be prioritized for all rail-ITS, and the deployment of road-ITS technologies at 5915-5925 MHz may be restricted to I2V communications. Further, the deployment of NR-V2X at 5875-5895 MHz (e.g., based on a 20 MHz carrier) may be for the provision of advanced safety related use cases as a complement to LTE-V2X. Additionally, operation at 5855-5875 MHz may be co-channel with existing license exempt non-specific short range devices (SRDs), and therefore may be subject to technical requirements that are more restrictive than those that apply above 5875 MHz in the 5.9 GHz band.

Certain challenges in association with inter-technology coexistence on safety have been exhibited. For instance, such challenges have been noted with regard to the viability of co-channel coexistence between LTE-V2X and ITS-G5 in the 5.9 GHz band. The co-existence may negatively impact the ability of the two technologies to deliver safe and reliable communications, and may potentially impact the specifications of the technologies and the complexity of certain products.

In a deployment scenario where NR-V2X devices are able to use the same resources, the NR-V2X numerology may need to be contained as perfectly as possible within the LTE-V2X numerology. NR-V2X is expected to be deployed in frequency range 1 (FR1) with a sub-carrier spacing of 30 kHz, while LTE-V2X has a sub-carrier spacing of 15 kHz. Therefore, in the time-domain, two NR-V2X slots can be contained in one LTE-V2X subframe, while in the frequency domain, an NR-V2X PRB may have twice the bandwidth of an LTE-V2X PRB. Both LTE-V2X and NR-V2X SL resources may be organized into RPs, which in the time domain may be organized into slots (NR-V2X) or subframes (LTE-V2X), while in the frequency domain these may be organized into sub-channels composed by a number of PRBs. The configurable number of PRBs for LTE-V2X and NR-V2X are as follows: LTE-V2X: 4, 5, 6, 8, 9, 10, 12, 15, 16, 18, 20, 25, 30, 48, 50, 72, 75, 96, 100; NR-V2X: 10, 12, 15, 20, 25, 50, 75, 100.

As an example, assuming a perfect overlap between an LTE-V2X RP and one or more NR-V2X RPs, the following pairing of configurations may be obtained, as depicted in Table 1 below**Error! Reference source not found.**. However, in other scenarios, as there may be multiple LTE-V2X resource pools, it may also be possible to achieve any number of LTE-V2X and NR-V2X RPs. In some cases, the LTE-V2X and NR-V2X PRBs may be aligned both in time and frequency.

**Table 1: Example of fully overlapped NR-V2X resource pool into LTE-V2X resource pool**

| **LTE-V2X subchannel configuration** | **NR-V2X subchannel configurations with perfect overlap** |
|---|---|
| 20 | 10 |
| 30 | 15 |
| 48 | 12 |
| 50 | 25 |
| 75 | 25 |
| 100 | 50, 25 |

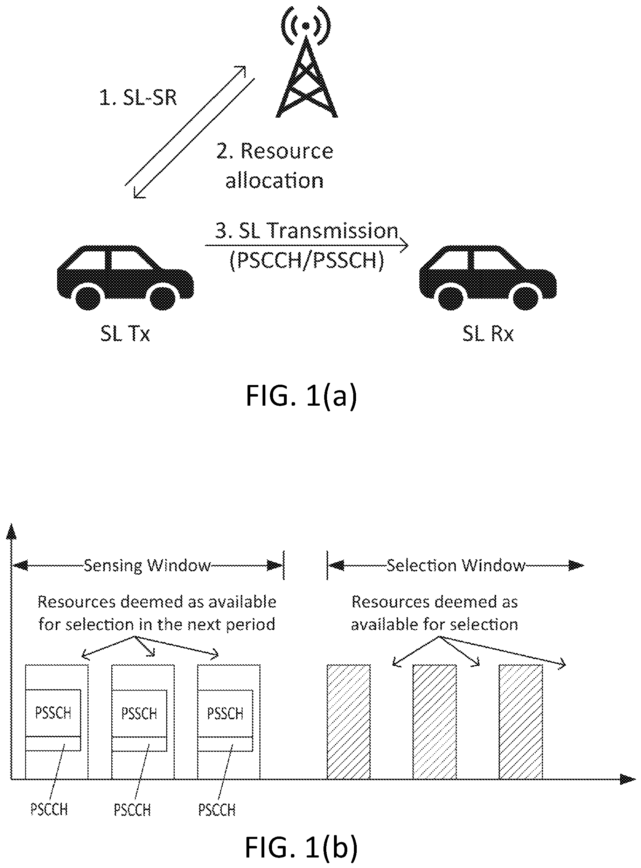

FIG. 1(a) illustrates an example LTE SL resource allocation mode 3, and FIG. 1(b) illustrates an example LTE SL resource allocation mode 4. As illustrated in FIGs. 1(a) and 1(b), LTE-V2X may be designed to facilitate vehicles to communicate with other nearby vehicles via direct/SL communication. Communications between these vehicles may take place in LTE-V2X using either mode 3 or mode 4. In LTE mode 4, the UE may be operating in a distributed mode. For instance, the UE is not relying on an eNB for sidelink resource selection, but instead relies on sensing or random based radio resource selection. On the contrary, LTE mode 3 is an eNB managed mode where the eNB assigns sidelink radio resources for the UE.

In the physical layer, LTE-V2X may use single-carrier frequency-division multiple access (SC-FDMA), and may support 10 MHz and 20 MHz channels. The channel may be divided into 180 kHz resource blocks (RBs) that correspond to 12 subcarriers of 15 kHz each. In the time domain, the channel may be organized into 1 ms subframes.

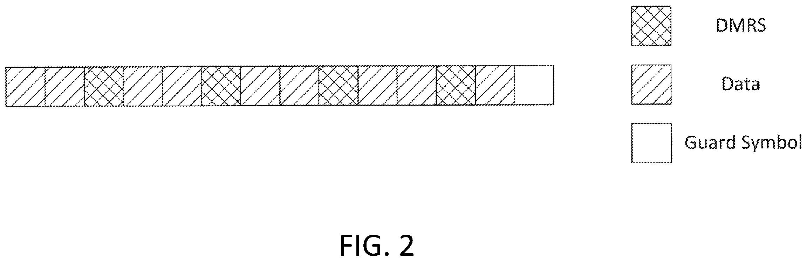

FIG. 2 illustrates an example LTE-V2X (subframe) slot format for the physical sidelink shared channel (PSSCH) and the physical sidelink control channel (PSCCH). As illustrated in FIG. 2, each subframe may have 14 orthogonal frequency division multiplex (OFDM) symbols with a normal cyclic prefix. Nine of the symbols may be used to transmit data, and four of the symbols (3rd, 6th, 9th, and 12th) may be used to transmit demodulation reference signals (DMRSs) for channel estimation and combating the Doppler effect at high speeds. The last symbol may be used as a guard symbol for timing adjustments, and for allowing vehicles to switch between transmission and reception across subframes.

In the physical layer, the RBs may be grouped into sub-channels. A sub-channel may include RBs only within the same subframe. Additionally, the number of RBs per sub-channel may vary, and may be (pre-)configured. The sub-channels may also be used to transmit data and control information, and the data may be organized in transport blocks (TBs) that are carried in the PSSCH. A TB may include a full message (e.g., a cooperative awareness message (CAM) or a basic safety message (BSM)). A TB may also occupy one or more several sub-channels depending on the size of the packet, the number of RBs per sub-channel, and the utilized modulation and coding scheme (MCS). Further, TBs may be transmitted using quadrature phase shift keying (QPSK), 16-quadrature amplitude (QAM), or 64 QAM modulations and turbo coding.

Each TB may have an associated sidelink control information (SCI) message that is carried in the PSCCH (the SCI may also be referred to as a scheduling assignment (SA)). An SCI may occupy 2 RBs, and may include information such as an indication of the RBs occupied by the associated TB, the MCS used for the TB, the priority of the message that is being transmitted, an indication of whether it is a first transmission or a blind retransmission of the TB, and the resource reservation interval. A blind retransmission refers to a scheduled retransmission or repetition of the TB (i.e., not based on feedback from the receiver). The resource reservation interval specifies when the vehicle may utilize the reserved sub-channel(s) to transmit its next TB, and the SCI may include critical information for the correct reception of the TB. Additionally, a TB may not be decoded properly if the associated SCI is not received correctly, and a TB and its associated SCI may be transmitted in the same subframe.

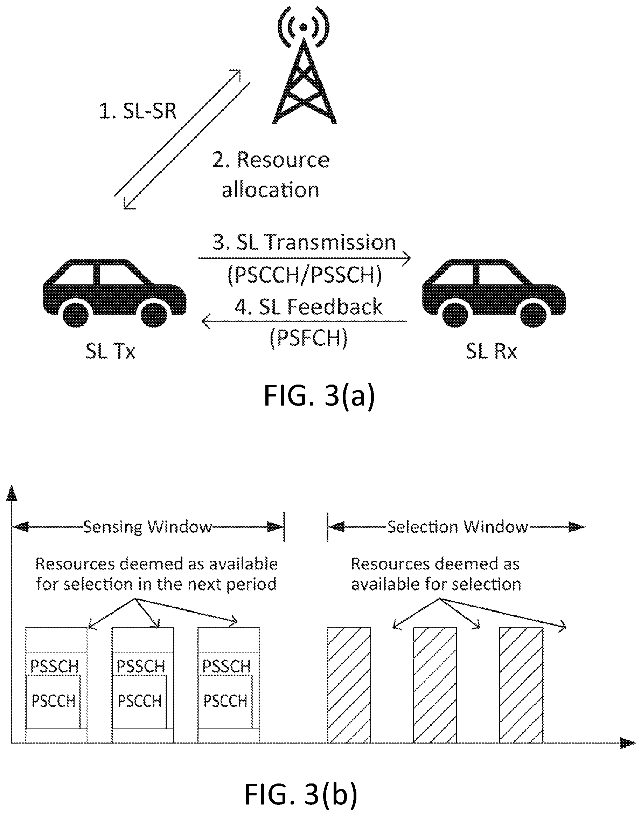

As to the NR-V2X, FIG. 3(a) illustrates an example NR SL resource allocation mode 1, and FIG. 3(b) illustrates an example NR SL resource allocation mode 2. NR SL may facilitate a UE to communicate with other nearby UEs via direct/SL communication. Two resource allocation modes may be provided, and a SL transmitter (TX) UE may be configured with one of them to perform its NR SL transmissions. As illustrated in FIGs. 3(a) and 3(b), these modes may include NR SL mode 1 and NR SL mode 2. In mode 1, a SL transmission resource may be assigned (scheduled) by the network (NW) to the SL TX UE, while a SL TX UE in mode 2 may autonomously select its SL transmission resources.

In the SL physical layer structure, the configuration of the resources in the SL RP may define the minimum information required for a RX UE to be able to decode a transmission. The transmission may include the number of sub-channels, the number of PRBs per sub-channels, the number of symbols in the PSCCH, which slots have a physical sidelink feedback channel (PSFCH), and other configuration aspects. However, the details of the actual SL transmission (i.e., payload) may be provided in the PSCCH (1^{st}-stage SCI) for each individual transmission, which may include the time and frequency resources, the DMRS configuration of the PSSCH, the MCS, and PSFCH.

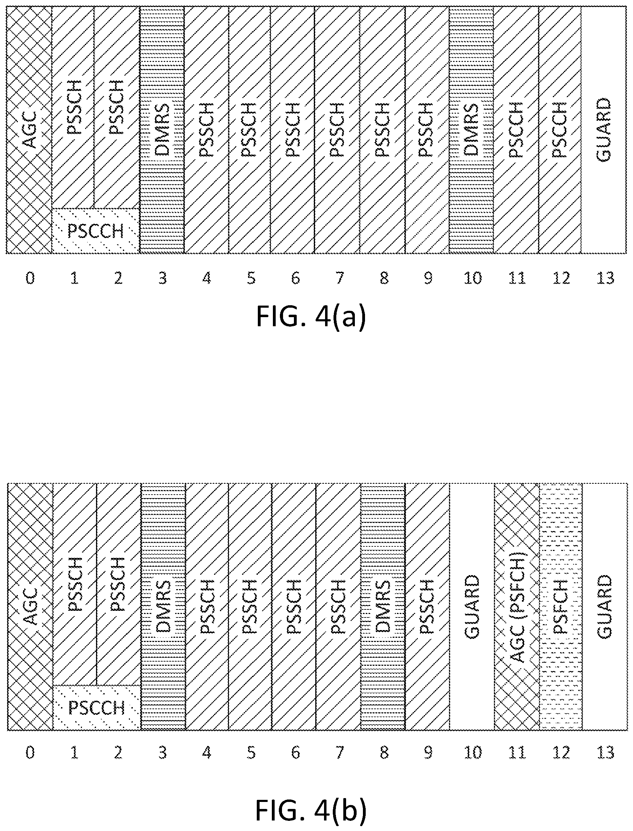

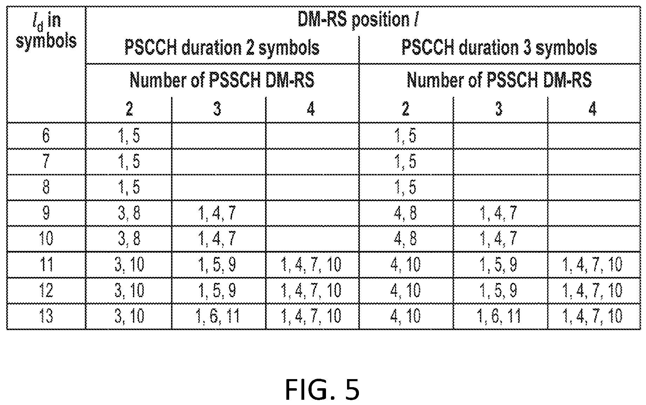

FIG. 4(a) illustrates an example SL format slot with PSCCH/PSSCH, and FIG. 4(b) illustrates an example SL slot format slot with PSCCH/PSSCH and PSFCH. An example of the SL slot structure is illustrated in FIGs. 4(a) and 4(b) where it is shown a slot with PSCCH/PSSCH, and a slot with PSCCH/PSSCH where the last symbols are used for PSFCH. The configuration of the PSCCH (e.g., DMRS, MCS, number of symbols used) is part of the RP configuration. Furthermore, the indication of which slots have PSFCH symbols is also part of the RP configuration. However, the configuration of the PSSCH (e.g., the number of symbols used, the DMRS pattern and the MCS) may be provided by the 1^{st}-stage SCI which may be the payload sent within the PSCCH and follows the configuration depicted in FIG. 5, which illustrates example PSSCH DMRS configurations. Specifically, FIG. 5 illustrates PSSCH DMRS configurations based on the number of used symbols and duration of the PSCCH.

In the LTE SL subframe structure design, the first symbol of each LTE SL subframe may be an automatic gain control (AGC) symbol, used by the LTE SL Rx UE to adjust the AGC gain of an incoming signal to minimize the quantization noise and prevent saturation at the transceiver analog-to-digital converter (ADC). The LTE SL Rx UE may be assumed to set the AGC gain based on a carrier wide measurement, as it may be assumed that analog filtering prior to ADC may be used to filter out-of-band signals while signals within the carrier frequency band are not filtered. Further, it may be assumed that the LTE SL Rx UE applies this AGC gain for the entire duration of the subframe considering that the power is expected to remain constant within the subframe (similar assumption made by an NR SL Rx UE).

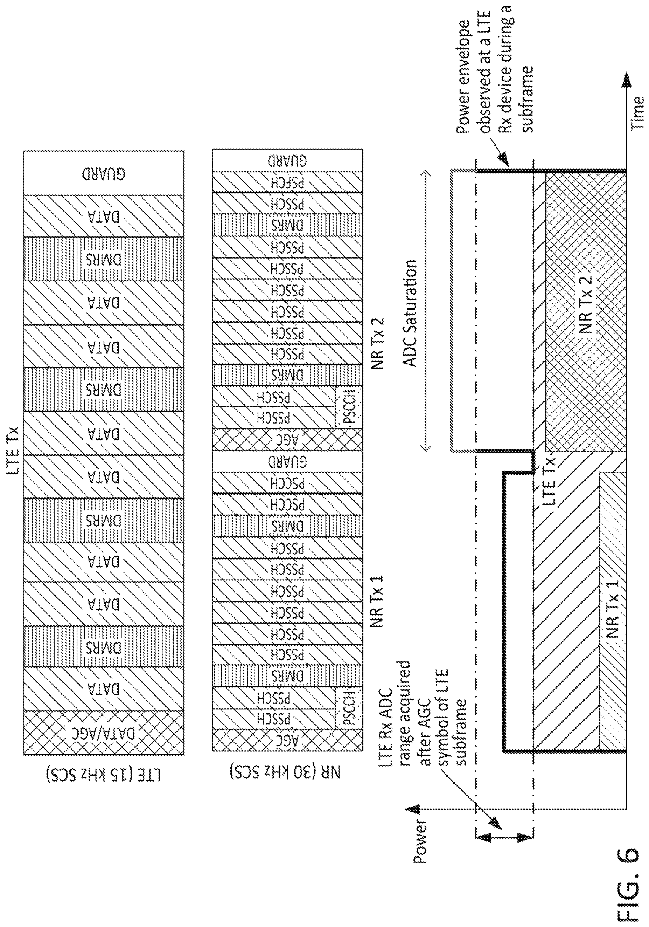

The AGC issue to the LTE SL Rx may occur in the examples illustrated in FIG. 6. In particular, FIG. 6 illustrates an example impact of NR transmissions induced on the setting of the LTE Rx's AGC. As illustrated in FIG. 6, NR SL operates with 30 kHz sub-carrier spacing (SCS), while LTE SL only supports 15 kHz SCS. In this case, there may be 2 NR SL slots that overlap (in time) a single LTE SL subframe, and the AGC issue may occur when the NR SL transmissions in the first and second slots are from different NR UEs (as illustrated in FIG. 6).

With reference to FIG. 6, a NR SL transmission occurs in the second slot, and the LTE Rx performs the AGC adjustment. The adjustment is performed in the first symbol of a LTE SL subframe where a NR SL transmission is absent and the AGC's gain may be adjusted to a lower received signal power (LTE only). When the NR performs its transmission in the second slot, its signal may be added to the ongoing LTE SL transmission, which increases the total received power at the LTE Rx while the AGC's gain determined in the first slot is still the one being applied.

Although the in-device coexistence framework for NR SL has been previously introduced, only in-device co-existence was supported. There are no corresponding mechanisms for LTE SL and NR SL co-channel coexistence. Thus, certain example embodiments provide enhancements to the NR resource selection and (re-)selection procedure, making it possible to avoid AGC issues to LTE SL Rx UEs caused by NR SL transmissions over LTE-NR shared resources.

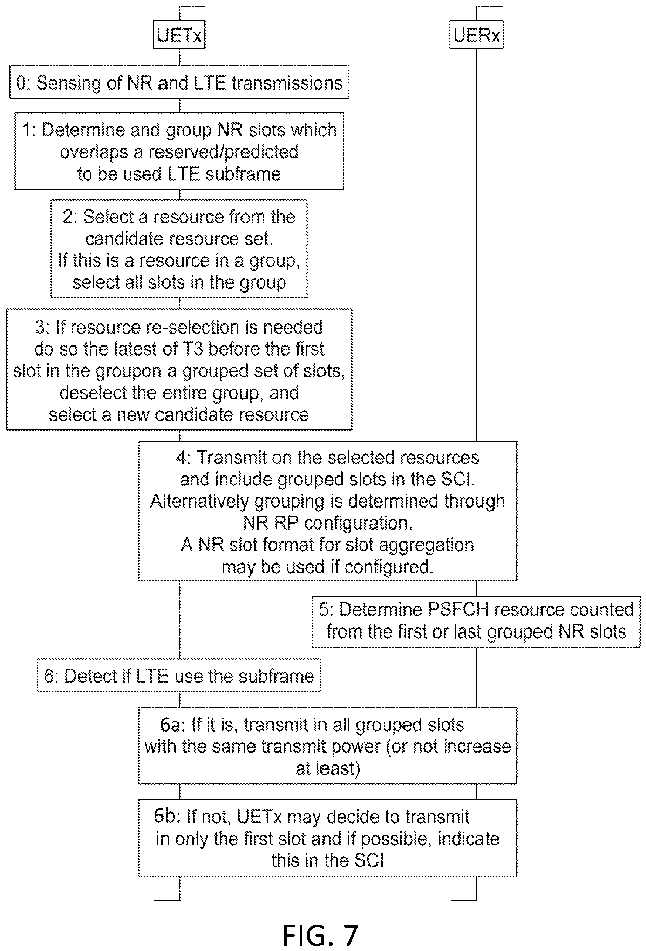

FIG. 7 illustrates an example flow diagram of a method, according to certain example embodiments. In particular, FIG.7 illustrates interactions between a NR SL Tx UE and a NR SL Rx UE. At operation 0, the NR SL Tx UE may sense NR and LTE transmissions from UETx to UERx. Then, in some example embodiments, HARQ feedback may be transmitted from UERx to UETx (if enabled). At operation 1, the NR SL Tx UE may determine which NR slots overlap a LTE subframe, and group the NR slots together such that the NR SL Tx UE may select all NR slots in the group. According to certain example embodiments, when the NR SL uses SCS of 30 kHz, then there may be two NR SL slots in the group. According to some example embodiments, when the NR SL uses SCS of 60 kHz, there may be four NR SL slots in the group. According to other example embodiments, the determination may be based on LTE and NR RP overlap in time as well as sensing results on LTE resources. The UETx may perform the sensing, and the UETx may be configured with an NR RP configuration that lists the possibility for LTE presence over the grouped slots. Then, the NR SL Tx UE may detect whether the LTE slots are in use. At operation 2, the NR SL Tx UE may conduct resource selection, and if the NR SL Tx UE reserves a slot that is grouped in operation 1, the NR SL Tx UE may select all the slots in the group. In other words, the NR SL Tx UE may select a resource from the candidate resource set, and if this is a resource in a group created in operation 1, all the slots in the group may be selected. In other words, in certain example embodiments, the selected resource from the candidate resource set may refer to a sub-channel in a slot. If that resource is in a slot that is a part of a group, then the entire group may be selected.

At operation 3, if needed, the NR SL Tx UE may perform a resource re-selection based on either a change of LTE or NR transmissions as long as this is detected T3 slots before the start of the first slot of the grouped slots. Additionally, the entire group may be de-selected, and a new candidate resource may be selected. With regard to the new candidate resource, in certain example embodiments, the NR SL Tx UE may select a resource (sub-channel(s) and slot), and then if the slot overlaps a grouped set of slots, in the time domain, the NR SL Tx UE may select the entire slot. At operation 4, the NR SL Tx UE may indicate in the SCI that its transmission is part of a group of slots. In some example embodiments, the group of slots may refer to a selected resource that translates to a group of slots and a set of resources used for transmission. According to certain example embodiments, this indication may also identify which slots are part of the group of slots. According to further example embodiments, the grouping may be determined through NR RP configuration, and a NR slot format for slot aggregation may be used if configured. According to some example embodiments, the NR SL Rx UE may use the information contained in the SCI to derive a single PSFCH feedback for the reserved slots in the group if PSFCH is enabled. For example, when the NR SL uses SCS of 30 kHz, the PSFCH mapping may be in relation to either the first or the second slot, which may correspond to the slots contained in the group formed in operation 1. This example embodiment may focus on which of the grouped slots should be used to indicate HARQ feedback in a PSFCH resource. According to other example embodiments, the NR SL Rx UE may use the information contained in the SCI to derive multiple and distinct retransmission(s) of the NR SL Tx UE for the current TB and transmissions for the next TB (i.e., SPS) are grouped, and which group of slots may occur.

At operation 5, after receiving the transmission from the NR SL Tx UE, the NR SL Rx UE may determine the slot for which PSFCH should be transmitted according to the last or the first NR slot. In certain example embodiments, PSFCH may be transmitted in a future slot that may or may not be a part of the group of slots created at operation 1. In some example embodiments, a grouped set of slots may, if mapped individually, be mapped into several bits in a single PSFCH occasion or to single bits in several PSFCH occasions. At operation 6, the NR SL Tx UE may detect whether LTE actually uses the subframe that overlaps the first slot in the group. At operation 6a, if the NR SL Tx UE detects the existence of LTE SL Tx UE in the last *T* [*msec or slots*] (where *T* is a (pre-)configured parameter), the NR SL Tx UE may be triggered to enable slot aggregation for NR SL transmission according to configuration. According to certain example embodiments, the detection may depend on the capability of the NR SL Tx and/or the NR SL Rx that would be a corresponding capability to receive and handle these grouped transmissions, and whether the start of the grouped slot and the LTE subframes are aligned. According to other example embodiments, the detection may be based on LTE sensing results obtained in the last *T* [*msec or slots*] before the start of the first NR slot in the group of slots, or it may be based on measuring in the start of the first slot or subframe before transitioning to transmit mode to transmit in the first slot. With respect to the LTE sensing results, the NR SL Tx UE may obtain LTE sensing results from an inter-device LTE module (via an internal interface), IUC from another NR SL UE that has an LTE module, or by being capable of conducting LTE sensing itself.

According to certain example embodiments, the LTE sensing result may be the outcome of the sensing period (e.g., up to 10s), where LTE subframes are monitored and if there is a transmission, attempted to be decoded. The result is then something such as (per slot): slot in use, RSRP/RSSI per sub-channel, SCI information (retransmission or first transmission, which MCS, which sub-channels, which periodicity). This information may allow the UE with the information to predict when a figure transmission will occur. With reference to the detection being based on LTE sensing results, there may be a fast measurement at the start of the first slot in the group where the device measures reference signal received power (RSRP)/received signal strength indicator (RSSI) to determine whether an LTE transmission is occurring. In other example embodiments, detection may also be based on both RSRP and RSSI.

In certain example embodiments, the enablement of NR SL transmission using slot aggregation may be provided by continuing SL transmission in the following aggregated slots (i.e., the group used in earlier operations) using the same transmission power, or within the configured power offset compared to the one used in the transmission of previous slots in the group of slots. According to other example embodiments, the enablement of NR SL transmission using slot aggregation may be applied for NR SL data traffic that follow the conditions configured (e.g., SL data with configured QoS profile).

At operation 6b, if the NR SL Tx UE does not detect the presence of the LTE SL Tx UE in the last *T* [*msec or slots*], the NR SL Tx UE may decide to use single slot transmission. In certain example embodiments, the slot of the single slot transmission may be the first NR slot that overlaps the LTE subframe. In other example embodiments, this NR slot may be configured to start in the middle of the aggregated slots in the slot aggregation group for better support of traffic with low latency requirement. In this case, the NR SL Tx UE may indicate in the SCI that it is not using grouped slots.

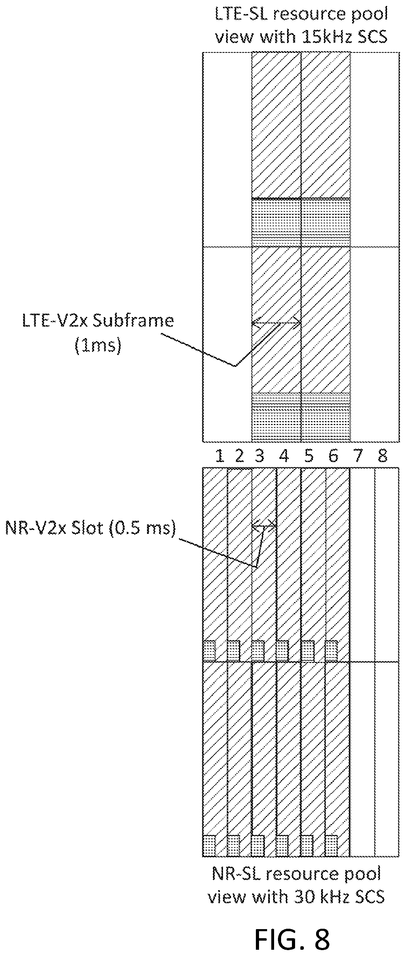

FIG. 8 illustrates an example of synchronized LTE SL and NR SL operations with co-channel co-existence, according to certain example embodiments. In certain example embodiments, it may be assumed that the co-channel coexistence between LTE SL and NR SL operations is synchronized in such a way that the LTE SL subframe boundary is aligned in time with the NR SL slot boundary as illustrated in FIG. 8. The alignment of the LTE SL subframe with the NR SL slot boundary may occur even though the LTE SL subframe or NR SL slot length is not the same due to different SCS. In other example embodiments, when a group of slots (or groups (e.g., for re-transmissions)) are signaled in an SCI, this may be via a new field in the 2^{nd} stage SCI carrying the number of L aggregated slots following the initial NR slot. According to certain example embodiments, when the groups of NR slots are determined based on a NR SL RP configuration, the NR SL RP configuration may include support of NR SL slot aggregation including the granularity (e.g., 2, 4, 8 slots aggregation for 30 kHz, 60 kHz, and 120 kHz SCS, respectively), and specific slots that can be aggregated.

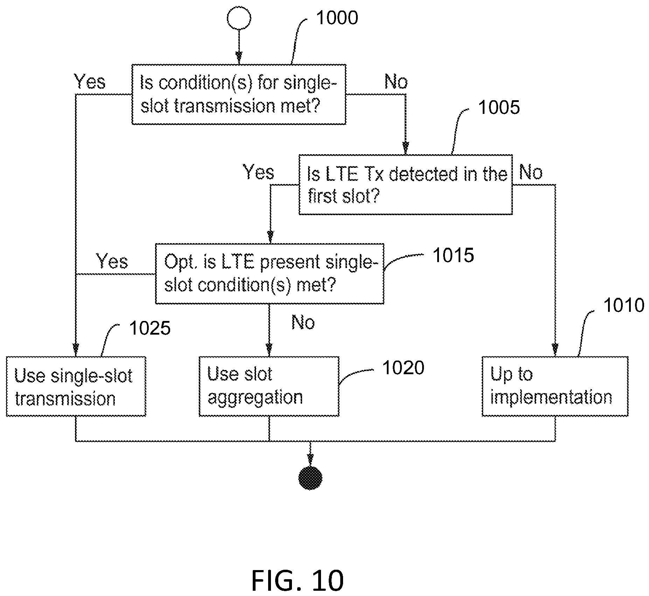

In certain example embodiments, there may be other means of determining whether groups of slots should be considered. For instance, in some example embodiments, determining whether groups of slots should be considered may be performed by means of a resource pool configuration. If the device is configured with both an LTE and NR resource pool, it may be able to determine which slots could overlap. This may be applicable for a type A NR SL device which may have both an NR and LTE module. If it is a type B NR SL device (only a standalone NR module), it may be configured with the LTE RP or the NR slots that may be grouped. In other example embodiments, determining whether groups of slots should be considered may include determining whether grouping should be applied or not. Here, there may be no need to apply the grouping of slots of there is no LTE transmission. However, the NR SL Tx UE may rely on sensing and some rules as described in FIG. 10 to determine if it should transmit in all grouped slots or only the first one.

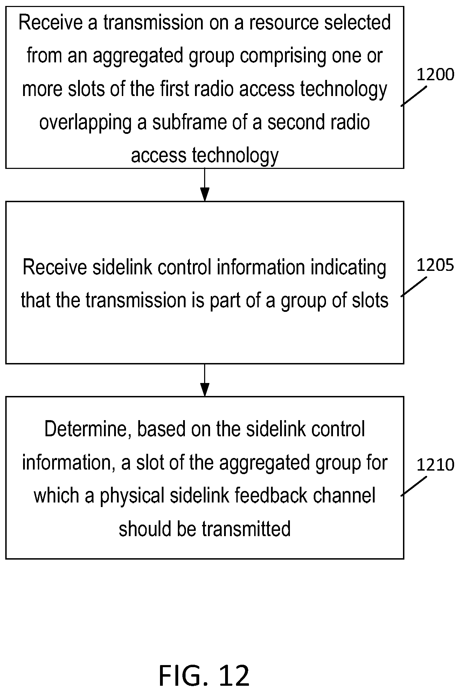

As discussed in more detail herein, the high-level sequence diagram of certain example embodiments is illustrated in FIG. 12. When the NR SL RP is configured with the overlapping resources of LTE SL RP, support of slot aggregation related configuration may be included in the NR SL RP configuration. An example of a slot aggregation configuration may include:

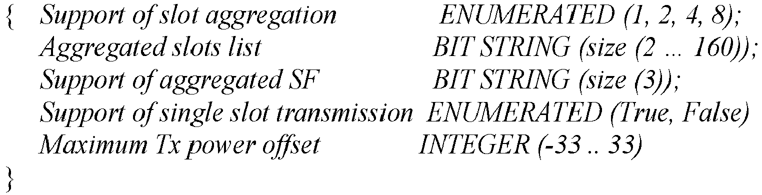

According to certain example embodiments, as the configured NR SL RP and LTE SL RP may not be fully overlapping (e.g. as illustrated in FIG. 8), the slot aggregation may not be applied for all the slots in the configured NR SL RP. Therefore, the list of the aggregated slots may be configured using a bitmap. For instance, using the example illustrated in FIG. 8, there are 6 slots in NR SL RP, of which the last 4 slots support slot aggregation. Thus, the aggregated slot list may be configured using a bitmap (*001111*). Together with the number of slots (2, 4, or 8) in each slot aggregation group, the aggregated slot list may also be grouped into multiple slot aggregation groups. For instance, with a 30 kHz SCS NR numerology, a bitmap of 001111 may indicate that NR slots 1 and 2 are not candidates for grouping, whereas slots 3 and 4 may be grouped, and slots 5 and 6 may be grouped.

In certain example embodiments, NR SL may include multiple slot formats for transmission in a group of consecutive slots with either one or a combination of the following slot formats. For instance, in a first slot format (SF#1), the aggregated slot format may have a single AGC symbol, PSCCH transmission occasion, guard symbol, and a single associated PSFCH occasion for hybrid automatic repeat request (HARQ) feedback if HARQ feedback enabled SL transmission is configured. Using SF#1, one SL transmission may be performed using the aggregated slots.

In a second slot format (SF#2), the legacy NR SL slot format (i.e., each NR SL slot has AGC symbol, PSCCH symbols, guard symbol, as well as PSFCH symbol if configured) may be configured for backward compatible support of the NR SL Rx UE. Here, the slot aggregation may be enabled by using multiple consecutive slots for transmission of multiple different TBs or SL transmission repetition.

In a third slot format (SF#3), the legacy NR SL slot format may be kept. However, the guard symbol(s) between the two NR SL slots may be instead either a repetition of the last symbol of the first slot, or a repetition of the first symbol of the second slot.

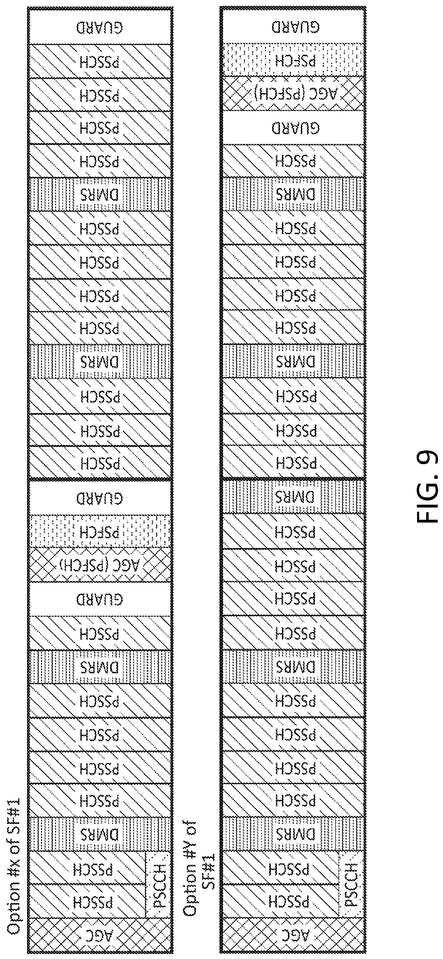

According to certain example embodiments, for slots that support slot aggregation, the aggregated slot format may be configured to support either one of SFs or any combination of different SFs, which may be configured using a bitmap to indicate whether each of SF is supported or not. FIG. 9 illustrates an example of different options of SF#1, according to certain example embodiments..

According to other example embodiments, for slots that support slot aggregation, it can also be configured whether single slot transmission is supported or not along with a set of conditions for using single slot transmission. For instance, a condition could be latency, where the NR SL Tx may be to use a single slot transmission to meet this latency deadline no matter whether an LTE Tx is detected or not. In certain example embodiments, this/those condition(s) can be used in different variants for both a set of conditions prior to detecting if LTE is present or not, and when LTE is present (referred to as Opt. conditions). Some example conditions may include:

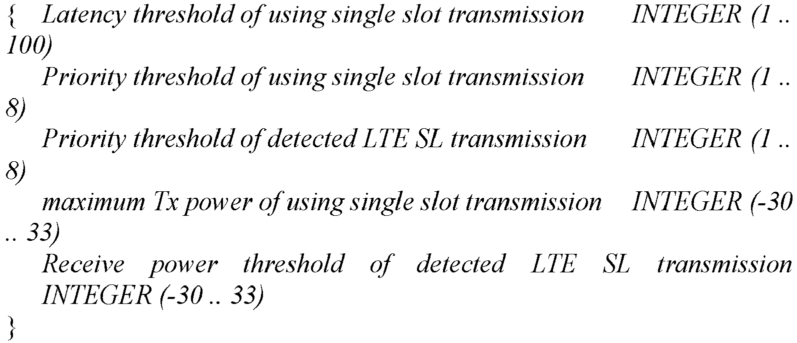

In certain example embodiments, when the LTE SL transmission is detected, the NR SL transmission using a single slot transmission may still be used for the SL data traffic with a latency requirement lower than a configured threshold, and/or the priority of the data traffic is higher than a configured threshold, and/or the detected LTE SL transmission with a priority lower than a configured threshold if the NR SL Tx UE has the capability of sensing LTE SL transmissions. In addition, the maximum Tx power for a single slot transmission or maximum Tx power offset compared with a previous slot transmission may be configured for a single slot transmission to reduce the impact of any potential AGC issues of the LTE SL Rx UE.

FIG. 10 illustrates an example flow diagram of a NR SL Tx decision chain, according to certain example embodiments. The NR SL Tx decision chain may be on whether to use single-slot or aggregated slots. In particular, at operation 1000, the NR SL Tx UE may determine if the LTE single-slot condition(s) is met. If no, at operation 1005, the NR SL Tx UE may determine whether LTE Tx is detected in the first slot. If no, then at operation 1010, the decision on whether to use single-slot or aggregated slots may be up to network configurations or UE pre-configurations.

As illustrated in FIG. 10, if LTE (or any other type of radio access technology may be used) is detected in the first slot, while no conditions to use single slot conditions from 1200 is met, then operation 1015 triggered. Operation 1015 is not mandatory, and if not present decision no is used. In operation 1015, the NR SL Tx UE may determine whether a second set of single-slot condition(s) is met. If no, then at operation 1020, the NR SL Tx UE may use slot aggregation. If yes, then at operation 1025, the NR SL Tx UE may use a single slot transmission. Additionally, if at operation 1000 the NR SL Tx UE determines that the condition(s) for single-slot transmission is met, the NR SL Tx UE may use a single-slot transmission at operation 1025.

In certain example embodiments, based on the NR SL RP configuration support of slot aggregation, the NR SL Tx UE may detect the existence or reservation of an LTE SL transmission to determine whether NR SL transmission should be performed using slot aggregation, or whether single slot transmission usage is left for UE implementation to decide. Either the energy sensing based on, for example, different power spectrum density (PSD) of LTE SL and NR SL may be used to detect an ongoing LTE SL transmission, or LTE SL SCI sensing based on monitoring and decoding LTE SL SCI (SL control information) in a prior LTE subframe may be used for NR SL UE to detect the reservation of the LTE SL transmission.

In certain example embodiments, examples of implementation conditions in operation 1015 on whether to use single slot or slot aggregation when no LTE Tx is detected may include: a desire for legacy NR devices to be able to receive the transmission; or processing limitations including, for example, the device not preparing a transmission for the case of single-slot and aggregated slots, and therefore selects one of them in advance (e.g., slot aggregation as that would be allowed no matter of the LTE detection outcome). In certain example embodiments, the conditions in operation 1015 may relate to the conditions mentioned in operation 1000 or the conditions mentioned in operation 1015, but they do not have to.

According to certain example embodiments, if the NR SL Tx UE does not detect an LTE SL transmission, single slot NR SL transmission can be enabled, which provides more flexible transmitting time of NR SL transmission (i.e. NR SL transmission can start at any slot in the configured RP) especially for SL data with low latency requirement. However, enabling of single slot NR SL transmission may not necessarily prevent the NR SL transmission to use slot aggregation especially with SF#1 for more resource efficient transmission as the number of AGC and guard symbols can be reduced in SF#1 for high data rate traffic. Utilizing slot aggregation can additionally be more power efficient as it allows the UE to save several HW power-up/power-down periods by transmitting in more than a single slot at once.

In certain example embodiments, if single slot transmission is enabled in the first slot of configured slot aggregation group, the NR SL Tx UE may be configured to detect existence of an LTE SL (e.g., using energy detection) during the guard symbol of the NR SL transmission. If the LTE SL transmission is detected during the guard symbol of the NR SL, the NR SL Tx UE may be configured to switch to slot aggregation by continuing transmission in the following slots of the slot aggregation group. The following slot transmission can be either the repetition of the first slot transmission or new SL transmission if there is still new data available in the Tx UE transmission buffer. According to certain example embodiments, the constant transmission power for first slot transmission and the rest of the slots transmission may be used, or at least within the configured maximum transmission power offset.

In other example embodiments, if the NR SL Tx UE detects the existence of an LTE SL transmission (operation 1205), single slot transmission may be used if the configured (optional.) condition(s) on usage of single slot transmission is/are met (operation 1215). Otherwise, the NR SL transmission using slot aggregation may be enabled (operation 1220). According to certain example embodiments, the configured slot format may be used for NR SL transmission using slot aggregation. In certain example embodiments, when SF# 1 is configured and used, the NR SL Rx UE may have the capability of receiving the NR SL transmission using SF#1 of slot aggregation. In other example embodiments, the Rx UE capability may be exchanged during or after SL unicast connection establishment. Alternatively, support of the new slot formats may be mandatory for NR UEs that support co-channel coexistence with LTE SL. Otherwise, SF#2 of slot aggregation may be used.

According to certain example embodiments, in the case of SF#2, the NR SL Tx UE may determine to transmit multiple different TBs or transmit multiple same SL TBs (i.e., transmission repetition) in the consecutive slots of the slot aggregation group based on, for example, the amount of SL data in the transmission buffer. According to other example embodiments, the multiple different SL transmissions may be targeted to the same or different NR SL Rx UEs. However, the transmission power of the multiple different SL transmissions may be kept constant or at least the transmission power difference may be within the configured maximum transmission power offset.

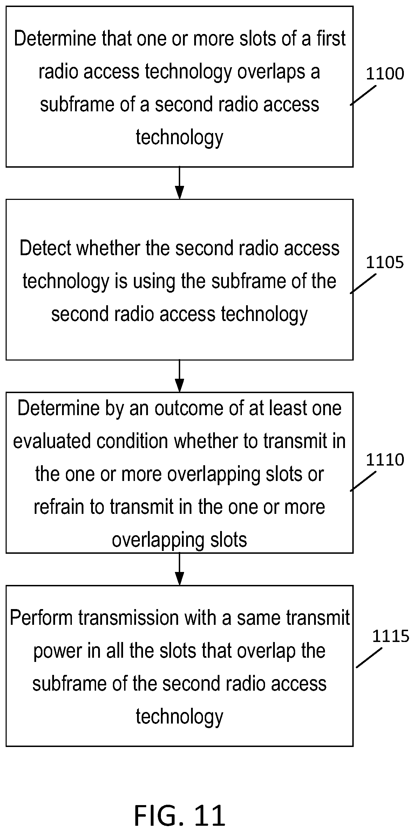

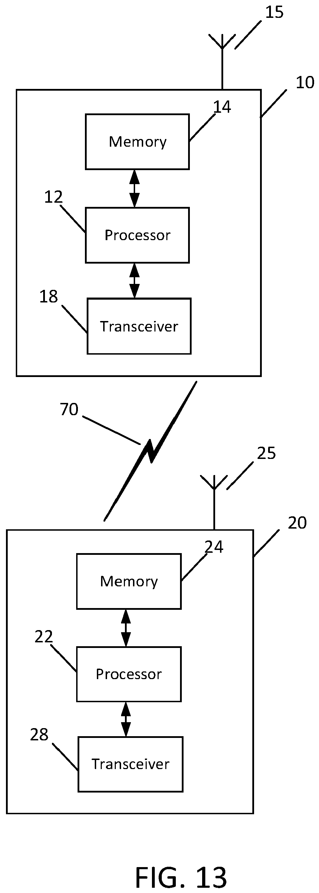

FIG. 11 illustrates an example flow diagram of a method, according to certain example embodiments. In an example embodiment, the method of FIG. 11 may be performed by a network entity, or a group of multiple network elements in a 3GPP system, such as LTE or 5G-NR. For instance, in an example embodiment, the method of FIG. 11 may be performed by a NR SL Tx UE similar to one of apparatuses 10 or 20 illustrated in FIG. 13.

According to certain example embodiments, the method of FIG. 11 may include, at 1100, determining that one or more slots of a first radio access technology overlaps a subframe of a second radio access technology. The method may also include, at 1105, detecting whether the second radio access technology is using the subframe of the second radio access technology. The method may further include, at 1110, determining by an outcome of at least one evaluated condition whether to transmit in the one or more overlapping slots or refrain to transmit in the one or more overlapping slots. In addition, the method may include, at 1115, performing transmission with a same transmit power in all the slots that overlap the subframe of the second radio access technology.

According to certain example embodiments, in response to the subframe of the second radio access technology being detected to not be in use, the method may further include performing the data transmission on at least one slot of the one or more slots. According to some example embodiments, in response to the subframe of the second radio access technology being detected to be in use, the method may also include performing the data transmission in all of the at least one or more slots. According to other example embodiments, the one or more slots may include a first set of slots when the transmission is performed with a first sub-carrier spacing, and the one or more slots may include a second set of slots when the transmission is performed with a second sub-carrier spacing.

In certain example embodiments, the determination that one or more slots of the first radio access technology overlaps the subframe of the second radio access technology is based on an overlap in time of a resource pool of the first radio access technology and a resource pool of the second radio access technology, and sensing results on resources of the second radio access technology. In some example embodiments, the determination that one or more slots of the first radio access technology overlaps the subframe of the second radio access technology may be based on a resource pool configuration of the first radio access technology. In other example embodiments, the resource pool configuration may include support of slot aggregation of the first radio access technology. In further example embodiments, the support of slot aggregation of the first radio access technology may include granularity, and specific slots that can be aggregated. In certain example embodiments, the slot aggregation may include transmission in one or more consecutive slots that overlaps the subframe of the second radio access technology.

According to certain example embodiments, the method may further include indicating in a sidelink control information that the data transmission is part of a group of slots. According to some example embodiments, the sidelink control information may identify which slots of the one or more slots are part of the group of slots. According to other example embodiments, the one or more slots may support slot aggregation, and the one or more slots that support slot aggregation may be configured for single slot transmission based on at least one condition for using only a single slot in the group of slots.

In certain example embodiments, the at least one condition for using only a single slot in an aggregate group of slots may include at least one of a latency threshold of using single slot transmission, a priority threshold of using single slot transmission, a priority threshold of detected transmission in the second radio access technology, a maximum transmit power of using single slot transmission, or a receive power threshold of detected transmission in the second radio access technology. In other example embodiments, the one or more slots may include a plurality of slot formats for transmission in a group of consecutive slots. In some example embodiments, the plurality of slot formats may include variations of a combination of an automatic gain control symbol, a physical sidelink shared channel transmission occasion, a guard symbol, and an associated physical sidelink feedback channel occasion.

FIG. 12 illustrates an example of a flow diagram of another method, according to certain example embodiments. In an example embodiment, the method of FIG. 12 may be performed by a network entity, or a group of multiple network elements in a 3GPP system, such as LTE or 5G-NR. For instance, in an example embodiment, the method of FIG. 12 may be performed by a NR SL Rx UE similar to one of apparatuses 10 or 20 illustrated in FIG. 13.

According to certain example embodiments, the method of FIG. 12 may include, at 1200, receiving, from a user equipment of a first radio access technology, a transmission on a resource selected from an aggregated group comprising one or more slots of the first radio access technology overlapping a subframe of a second radio access technology. The method may also include, at 1205, receiving, from the user equipment of the first radio access technology, sidelink control information indicating that the transmission is part of a group of slots. In certain example embodiments, the sidelink control information may identify which slots are part of the aggregated group. The method may further include, at 1210, determining, based on the sidelink control information, a slot of the aggregated group for which a physical sidelink feedback channel should be transmitted.

According to certain example embodiments, the physical sidelink feedback channel may be transmitted in a first slot or a last slot of the aggregated group. According to other example embodiments, the method may further include deriving, based on the sidelink control information, a single physical sidelink feedback channel feedback for reserved slots in the aggregated group, or deriving, based on the sidelink control information, a plurality of distinct physical sidelink feedback channel feedback resources for the reserved slots in the aggregated group. According to some example embodiments, the one or more slots in the aggregated group may include a first set of slots when the transmission is performed with a first sub-carrier spacing, and the one or more slots in the aggregated group may include a second set of slots when the transmission is performed with a second sub-carrier spacing.

In certain example embodiments, the one or more slots may support slot aggregation, and the one or more slots that support slot aggregation may be configured for single slot transmission based on at least one condition for using only a single slot in the group of slots. In some example embodiments, the at least one condition for using only a single slot in the group of slots comprises at least one of a latency threshold of using single slot transmission, a priority threshold of using single slot transmission, a priority threshold of detected transmission in the second radio access technology, a maximum transmit power of using single slot transmission, or a receive power threshold of detected transmission in the second radio access technology. In other example embodiments, the one or more slots may include a plurality of slot formats. In further example embodiments, the plurality of slot formats may include variations of a combination of an automatic gain control symbol, a physical sidelink shared channel transmission occasion, a guard symbol, and an associated physical sidelink feedback channel occasion.

FIG. 13 illustrates a set of apparatus 10 and 20 according to certain example embodiments. In certain example embodiments, the apparatus 10 may be an element in a communications network or associated with such a network, such as a UE, mobile equipment (ME), mobile station, mobile device, stationary device, IoT device, or other device. It should be noted that one of ordinary skill in the art would understand that apparatus 10 may include components or features not shown in FIG. 13.

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 13.

As illustrated in the example of FIG. 13, apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 13, multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1-12.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The term "non-transitory," as used herein may correspond to a limitation of the medium itself (i.e., tangible, not a signal) as opposed to a limitation on data storage persistency (e.g., RAM vs ROM). The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1-12.

In some example embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to that one or more slots of a first radio access technology overlaps a subframe of a second radio access technology. Apparatus 10 may also be controlled by memory 14 and processor 12 to detect detecting whether the second radio access technology is using the subframe of the second radio access technology. Apparatus 10 may further be controlled by memory 14 and processor 12 to determine by an outcome of at least one evaluated condition whether to transmit in the one or more overlapping slots or refrain to transmit in the one or more overlapping slots. In addition, apparatus 10 may be controlled by memory 14 and processor 12 to perform transmission with a same transmit power in all the slots that overlap the subframe of the second radio access technology.

In other example embodiments, apparatus 10 may be controlled by memory 14 and processor 12 to receive, from a user equipment of a first radio access technology, a transmission on a resource selected from an aggregated group comprising one or more slots of the first radio access technology overlapping a subframe of a second radio access technology. Apparatus 10 may also be controlled by memory 14 and processor 12 to receive, from the user equipment of the first radio access technology, sidelink control information indicating that the transmission is part of a group of slots. In certain example embodiments, the sidelink control information may identify which slots are part of the aggregated group. In addition, apparatus 10 may be controlled by memory 14 and processor 12 to determine, based on the sidelink control information, a slot of the aggregated group for which a physical sidelink feedback channel should be transmitted.

As illustrated in the example of FIG. 13, apparatus 20 may be a network, core network element, or element in a communications network or associated with such a network, such as a gNB. It should be noted that one of ordinary skill in the art would understand that apparatus 20 may include components or features not shown in FIG. 13.

As illustrated in the example of FIG. 13, apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 13, multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGs. 1-12.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGs. 1-12.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for determining that one or more slots of a first radio access technology overlaps a subframe of a second radio access technology. The apparatus may also include means for detecting whether the second radio access technology is using the subframe of the second radio access technology. The apparatus may further include means for determining by an outcome of at least one evaluated condition whether to transmit in the one or more overlapping slots or refrain to transmit in the one or more overlapping slots. In addition, the apparatus may include means for performing transmission with a same transmit power in all the slots that overlap the subframe of the second radio access technology.

Certain example embodiments may also be directed to an apparatus that includes means for from a user equipment of a first radio access technology, a transmission on a resource selected from an aggregated group comprising one or more slots of the first radio access technology overlapping a subframe of a second radio access technology. The apparatus may also include means for receiving, from the user equipment of the first radio access technology, sidelink control information indicating that the transmission is part of a group of slots. According to certain example embodiments, the sidelink control information identifies which slots are part of the aggregated group. The apparatus may further include means for determining, based on the sidelink control information, a slot of the aggregated group for which a physical sidelink feedback channel should be transmitted.

Certain example embodiments described herein provide several technical improvements, enhancements, and /or advantages. For instance, in some example embodiments, it may be possible to enhance NR resource selection and (re-)selection procedure. In other example embodiments, it may be possible to avoid AGC issues to the LTE SL Rx UEs caused by NR SL transmissions over LTE-NR shared resources. In further example embodiments, NR SL may be allowed to operate with higher SCS than 15 kHz, while co-channel co-existence with LTE while avoiding AGC issues to the LTE Rx SL UE. Additionally, according to some example embodiments, it may be possible to group NR slots (to avoid LTE Rx SL UE AGC issue) when needed. Further, the grouping of NR slots may be managed by a configured set of conditions that still allow NR transmissions to take priority over LTE transmissions.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- AGC: Automatic Gain Control
- BS: Base Station
- BSM: Basic Safety Message
- CAM: Cooperative Awareness Message
- DL: Downlink
- DMRS: Demodulation Reference Signal
- eNB: Enhanced Node B
- gNB: 5G or Next Generation NodeB
- HARQ: Hybrid Automatic Repeat Request
- ITS: Intelligent Transport Systems
- LTE: Long Term Evolution
- MCS: Modulation and Coding Scheme
- NR: New Radio
- NW: Network
- OFDM: Orthogonal Frequency Division Multiplex
- PRB: Physical Resource Block
- PSCCH: Physical Sidelink Control Channel
- PSFCH: Physical Sidelink Feedback Channel
- PSSCH: Physical Sidelink Shared Channel
- QAM: Quadrature Amplitude Modulation
- QPSK: Quadrature Phase Shift Keying
- (P)RB: (Physical) Resource Block
- RP: Resource Pool
- RSRP: Reference Signal Received Power
- Rx: Receiver
- SA: Scheduling Assignment
- SCS: Sub-Carrier Spacing
- SCI: Sidelink Control Information
- SC-FDMA: Single Carrier Frequency-Division Multiple Access
- SF: Slot Format
- SIB: System Information Block
- SPS: Semi-Persistent Scheduling
- TB: Transport Block
- Tx: Transmitter
- UE: User Equipment
- UL: Uplink
- V2X: Vehicle-to-Everything

## Claims

1. An apparatus, comprising:
means for determining that one or more slots of a first radio access technology overlaps a subframe of a second radio access technology;
means for detecting whether the second radio access technology is using the subframe of the second radio access technology;
means for determining by an outcome of at least one evaluated condition whether to transmit in the one or more overlapping slots or refrain to transmit in the one or more overlapping slots; and
means for performing transmission with a same transmit power in all the slots that overlap the subframe of the second radio access technology.

2. The apparatus according to claim 1, wherein in response to the subframe of the second radio access technology being detected to not be in use, the apparatus further comprises:
means for performing the data transmission on at least one slot of the one or more slots.

3. The apparatus according to claim 1, wherein in response to the subframe of the second radio access technology being detected to be in use, the apparatus further comprises:
means for performing the data transmission in all of the at least one or more slots.

4. The apparatus according to any of claims 1 to 3,
wherein the one or more slots comprises a first set of slots when the transmission is performed with a first sub-carrier spacing, and
wherein the one or more slots comprises a second set of slots when the transmission is performed with a second sub-carrier spacing.

5. The apparatus according to any of claims 1 to 4, wherein the determination that one or more slots of the first radio access technology overlaps the subframe of the second radio access technology is based on
an overlap in time of a resource pool of the first radio access technology and a resource pool of the second radio access technology, and
sensing results on resources of the second radio access technology.

6. The apparatus according to any of claims 1 to 5,
wherein the determination that one or more slots of the first radio access technology overlaps the subframe of the second radio access technology is based on a resource pool configuration of the first radio access technology,
wherein the support of slot aggregation of the first radio access technology comprising granularity, and specific slots that can be aggregated, and
wherein the slot aggregation comprises transmission in one or more consecutive slots that overlaps the subframe of the second radio access technology.

7. The apparatus according to any of claims 1 to 6, further comprising:
means for indicating in a sidelink control information that the data transmission is part of a group of slots,
wherein the sidelink control information identifies which slots of the one or more slots are part of the group of slots.

8. The apparatus according to claim 7,
wherein the one or more slots support slot aggregation, and
wherein the one or more slots that support slot aggregation is configured for single slot transmission based on at least one condition for using only a single slot in the group of slots.

9. The apparatus according to claim 8, wherein the at least one condition for using only a single slot in an aggregate group of slots comprises at least one of the following:
a latency threshold of using single slot transmission,
a priority threshold of using single slot transmission,
a priority threshold of detected transmission in the second radio access technology,
a maximum transmit power of using single slot transmission, or
a receive power threshold of detected transmission in the second radio access technology.

10. The apparatus according to any of claims 1 to 9, wherein the one or more slots comprises a plurality of slot formats, wherein the plurality of slot formats comprise variations of a combination of an automatic gain control symbol, a physical sidelink shared channel transmission occasion, a guard symbol, and an associated physical sidelink feedback channel occasion.

11. The apparatus according to any preceding claim, wherein the means comprise: at least one processor; and at least one memory storing instructions that, when executed by the at least one processor, cause performance of the apparatus.

12. A method comprising:
determining that one or more slots of a first radio access technology overlaps a subframe of a second radio access technology;
detecting whether the second radio access technology is using the subframe of the second radio access technology;
determining by an outcome of at least one evaluated condition whether to transmit in the one or more overlapping slots or refrain to transmit in the one or more overlapping slots; and
performing transmission with a same transmit power in all the slots that overlap the subframe of the second radio access technology.

13. An apparatus, comprising:
means for receiving, from a user equipment of a first radio access technology, a transmission on a resource selected from an aggregated group comprising one or more slots of the first radio access technology overlapping a subframe of a second radio access technology;
means for receiving, from the user equipment of the first radio access technology, sidelink control information indicating that the transmission is part of a group of slots, wherein the sidelink control information identifies which slots are part of the aggregated group; and
means for determining, based on the sidelink control information, a slot of the aggregated group for which a physical sidelink feedback channel should be transmitted.

14. A method, comprising:
receiving, from a user equipment of a first radio access technology, a transmission on a resource selected from an aggregated group comprising one or more slots of the first radio access technology overlapping a subframe of a second radio access technology;
receiving, from the user equipment of the first radio access technology, sidelink control information indicating that the transmission is part of a group of slots, wherein the sidelink control information identifies which slots are part of the aggregated group; and
determining, based on the sidelink control information, a slot of the aggregated group for which a physical sidelink feedback channel should be transmitted.

15. A computer readable medium comprising instructions stored thereon for performing the method according to claim 12 or claim 14.
